(19) Europäisches Patentamt
European Patent Office
Office européen des brevets

(11) EP 4 794 014 A1

(12) **EUROPEAN PATENT APPLICATION**

(43) Date of publication:
**19.08.2026 Bulletin 2026/34**

(21) Application number: **26156061.9**

(22) Date of filing: **03.02.2026**

(51) International Patent Classification (IPC):
***H01M 4/133*** *(2010.01)* ***H01M 4/134*** *(2010.01)*
***H01M 4/36*** *(2006.01)* ***H01M 4/38*** *(2006.01)*
***H01M 4/587*** *(2010.01)* ***H01M 10/0525*** *(2010.01)*
***H01M 4/62*** *(2006.01)*

(52) Cooperative Patent Classification (CPC):
**H01M 4/364; H01M 4/133; H01M 4/134; H01M 4/366; H01M 4/386; H01M 4/587; H01M 4/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.02.2025 JP 2025021961**

(71) Applicant: **Toyota Jidosha Kabushiki Kaisha**
**Toyota-shi, Aichi-ken 471-8571 (JP)**

(72) Inventor: **OSADA, Naoki**
**Toyota-shi, Aichi-ken, 471-8571 (JP)**

(74) Representative: **Winter, Brandl - Partnerschaft mbB**
**Alois-Steinecker-Straße 22**
**85354 Freising (DE)**

(54) **CARBON COMPOSITE ANODE**

(57) An anode configured to decrease the rate of expansion in thickness direction which is due to battery charge and discharge, the anode comprises an anode collector and an anode layer on at least one surface of the anode collector; the anode layer comprises a carbon composite material comprising Si and a first carbon material having an aspect ratio of more than 1, and a second carbon material having an aspect ratio of more than 1; the carbon composite material is carbon composite material particles; the second carbon material is second carbon material particles; and, of the carbon composite material particles contained in the anode layer, a percentage of those that an angle θ formed by the surface of the anode collector and a line of the carbon composite material particles in long axis direction is 50° or more and 90° or less, is 62% or more.

FIG. 1

20
22
30
31
θ
21
(A)
31
30
40
(B)



Processed by Luminess, 75001 PARIS (FR)

## Description

TECHNICAL FIELD

The disclosure relates to an anode.

BACKGROUND

Various studies have been proposed for anodes as disclosed in Patent Documents 1 and 2.

Patent Document 1: Japanese Patent Application Laid-Open (JP-A) No. 2019-185943
Patent Document 2: JP-A No. 2016-103337

In the prior art, a battery containing Si as an anode active material has the following problem: the anode containing the Si is deformed by virtue of the expansion and contraction of the Si which is due to charge and discharge of the battery, and the charge and discharge capacity of the Si-containing battery is decreased, accordingly.

SUMMARY

The present disclosure was achieved in light of the above circumstances. An object of the present disclosure is to provide an anode configured to decrease the rate of expansion in thickness direction which is due to battery charge and discharge.

The present disclosure includes the following embodiments.

<1> An anode comprising an anode collector and an anode layer on at least one surface of the anode collector,

wherein the anode layer comprises a carbon composite material comprising Si and a first carbon material having an aspect ratio of more than 1, and a second carbon material having an aspect ratio of more than 1;
wherein the carbon composite material is carbon composite material particles;
wherein the second carbon material is second carbon material particles; and
wherein, of the carbon composite material particles contained in the anode layer, a percentage of those that an angle $\theta$ formed by the surface of the anode collector and a line of the carbon composite material particles in long axis direction is 50° or more and 90° or less, is 62% or more.

<2> The anode according to the above <1>, wherein, of the second carbon material particles contained in the anode layer, a percentage of those that an angle $\theta n$ formed by the surface of the anode collector and a line of the second carbon material particles in long axis direction is 50° or more and 90° or less, is 72% or more.
<3> The anode according to the above <1> of <2>, wherein, when a total of the second carbon material and the carbon composite material is 100% by mass, a percentage of the carbon composite material is from 5% by mass to 30% by mass.
<4> The anode according to any one of the above <1> to <3>, wherein an intensity ratio (110)/(002) of a (110) plane of the carbon composite material particles to a (002) plane thereof, both of which are obtained by X-ray diffraction measurement, is 0.10 or more.
<5> The anode according to any one of the above <1> to <4>, wherein at least one of the carbon composite material particles is disposed in each of spaces surrounded by the second carbon material particles.
<6> The anode according to any one of the above <1> to <5>,

wherein the first carbon material is carbon fibers, and
wherein the second carbon material is at least one selected from the group consisting of natural graphite, artificial graphite and hard carbon.

<7> The anode according to any one of the above <1> to <6>, wherein the anode comprises a plurality of the anode layers.
<8> A bipolar electrode comprising the anode defined by any one of the above <1> to <7> and a cathode, wherein the cathode comprises a cathode collector and a cathode layer in this order on another surface of the anode collector.

According to the present disclosure, an anode configured to decrease the rate of expansion in thickness direction

which is due to battery charge and discharge, can be provided.

## BRIEF DESCRIPTION OF THE DRAWINGS

In the accompanying drawings,

FIG. 1 is a schematic view of an example of the anode of the present disclosure, and
FIG. 2 is a schematic view of an example of the method for producing the carbon composite material of the present disclosure.

## DETAILED DESCRIPTION

Hereinafter, the embodiments of the present disclosure will be described in detail. Matters that are required to implement the present disclosure (such as common structures and production processes of anodes not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.

In addition, dimensional relations (such as length, width and thickness) in the drawings do not reflect actual dimensional relations.

In the disclosed embodiments, an example of the method for calculating the average particle diameter of particles is as follows. First, for a particle shown in an image taken at an appropriate magnification (e.g., 50,000x to 1,000,000x) with a scanning electron microscope (hereinafter referred to as SEM), the diameter when the particle is considered spherical, is calculated. Such a particle diameter calculation by SEM observation is carried out on 2 to 300 particles of the same type, and the average of the diameters of the particles is determined as the average particle diameter.

According to the present disclosure, provided is an anode comprising an anode collector and an anode layer on at least one surface of the anode collector,

wherein the anode layer comprises a carbon composite material comprising Si and a first carbon material having an aspect ratio of more than 1, and a second carbon material having an aspect ratio of more than 1;
wherein the carbon composite material is carbon composite material particles;
wherein the second carbon material is second carbon material particles; and
wherein, of the carbon composite material particles contained in the anode layer, a percentage of those that an angle $\theta$ formed by the surface of the anode collector and a line of the carbon composite material particles in long axis direction is 50° or more and 90° or less, is 62% or more.

According to the present disclosure, a desired number of electron conducting paths can be retained by combining the Si and the carbon material. In addition, since the carbon material has an aspect ratio of more than 1, the expansion direction of the Si is limited. In addition, in the carbon composite material of the present disclosure, since the Si is continuously disposed in the long axis direction of the particles, the Si is likely to stretch in the long axis direction during battery charge. In addition, since the long axis of the carbon composite material particles is oriented in the vertical direction so that the angle formed by the surface of the anode collector and the line of the carbon composite material particles in the long axis direction is 50° or more and 90° or less, the expansion direction of the Si can be controlled in the vertical direction during battery charge. Also, according to the present disclosure, the carbon composite material particles and the second carbon material particles, both of which are particles that are anisotropic in the expansion direction of the Si, are combined, and the expansion of the Si is absorbed by the interior of the spaces for expansion which are provided in the anode layer, thereby suppressing the rearrangement of the carbon composite material particles.

The anode of the present disclosure comprises the anode collector and the anode layer on at least one surface of the anode collector.

The anode layer is only required to be disposed on at least one surface of the anode collector, or it may be disposed on both surfaces of the anode collector. The anode may have a multi-layered structure by forming two or more anode layers on at least one surface of the anode collector. In the case of forming two or more anode layers, the anode active materials contained in the anode layers may be the same type of anode active material, or they may be different types of anode active materials.

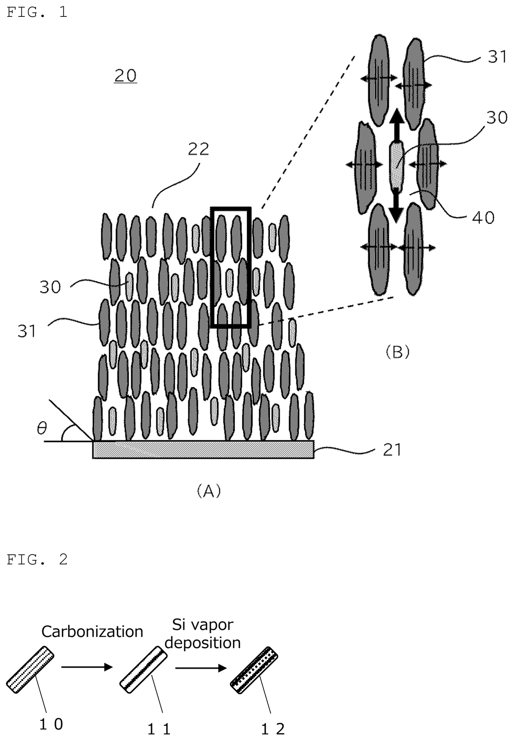

FIG. 1 is a schematic view of an example of the anode of the present disclosure. In FIG. 1, (A) is a schematic view of an example of the anode of the present disclosure, and (B) is a partial enlarged view of (A).

In an anode 20 shown in FIG. 1, an anode layer 22 containing carbon composite material particles 30 and second carbon material particles 31 is disposed on one surface of an anode collector 21. Each of the carbon composite material particles 30 is disposed in each of the spaces surrounded by the second carbon material particles 31 (spaces 40 for

expansion). In the anode layer 22, since the long axes of a predetermined number of the carbon composite material particles 30 are oriented in the vertical direction, the Si expands in the vertical direction during battery charge, and the expansion of the Si is absorbed by the interior of the spaces 40, thereby suppressing the rearrangement of the carbon composite material particles 31.

The anode layer of the present disclosure contains the carbon composite material and the second carbon material as the anode active material. As needed, the anode layer may contain at least one selected from the group consisting of an electroconductive material and a binder.

The anode layer contains at least the carbon composite material and second carbon material of the present disclosure as the anode active material. As needed, it further contains another anode active material. As another anode active material, an active material that is known as an anode active material for batteries can be used.

Of 100% by mass of the anode active material contained in the anode layer, the percentage of the carbon composite material may be 1% by mass or more, may be 5% by mass or more, may be 10% by mass or more, may be 70% by mass or less, may be 50% by mass or less, or may be 30% by mass or less.

When the total of the second carbon material and the carbon composite material is 100% by mass, the percentage of the carbon composite material may be 1% by mass or more, may be 5% by mass or more, may be 10% by mass or more, may be 70% by mass or less, may be 50% by mass or less, or may be 30% by mass or less.

As the electroconductive material and binder used in the anode layer, examples include, but are not limited to, those that will be exemplified below as the electroconductive material and binder used in a cathode layer.

The percentage of the electroconductive material in the anode layer may be 0.1% by mass or more and 5% by mass or less, for example.

The percentage of the binder in the anode layer may be 0.5% by mass or more and 15% by mass or less, for example.

The content of the anode active material in the anode layer of the present disclosure may be 50% by mass or more, may be 100% by mass or less, may be 90% by mass or less, or may be 74.5% by mass or less.

The carbon composite material is carbon composite material particles.

Of the carbon composite material particles contained in the anode layer, the percentage of those that the angle $\theta$ formed by the surface of the anode collector and the line of the carbon composite material particles in the long axis direction is 50° or more and 90° or less, is only required to be 62% or more. It may be 100% or less, or it may be 71% or less.

The second carbon material is the second carbon material particles.

Of the second carbon material particles contained in the anode layer, the percentage of those that the angle $\theta n$ formed by the surface of the anode collector and the line of the second carbon material particles in the long axis direction is 50° or more and 90° or less, may be 72% or more, may be 100% or less, or may be 81% or less.

At least one of the carbon composite material particles may be disposed in each of the spaces surrounded by the second carbon material particles (the spaces for expansion), or one of the carbon composite material particles may be disposed. That is, one or two or more of the carbon composite material particles may be surrounded by the second carbon material particles, or one of the carbon composite material particles may be surrounded by the second carbon material particles. Accordingly, the expansion of the Si contained in the carbon composite material particles during battery charge is absorbed by the interior of the spaces for expansion which are provided in the anode layer; the rearrangement of the carbon composite material particles is suppressed; and the deformation of the anode layer which is due to battery charge and discharge, is suppressed.

The angle $\theta$ formed by the surface of the anode collector and the line of the carbon composite material particles in the long axis direction, is the orientation degree of the carbon composite material particles in the anode layer. The angle $\theta n$ formed by the surface of the anode collector and the line of the second carbon material particles in the long axis direction, is the orientation degree of the second carbon material particles in the anode layer. These angles can be calculated by use of a cross-sectional image of the anode obtained by SEM, X-ray CT or the like.

In the present disclosure, the orientation degree of the particles is determined as follows. First, from the particles shown in the field of view of the cross-sectional image of the anode, 30 to 100 particles are separately extracted and used for elliptical approximation. The long and short axes of each particle are extracted, and the anode collector is determined as a horizontal plane. Of the angles formed by the meeting of the long axis of each particle and the horizontal plane, the degree of a minor (acute) angle is measured. The measured degree is considered as the inclination angle $\theta$ or $\theta n$ of the particle, thereby determining the orientation degree of the particle.

The orientation degree of the carbon composite material particles in the anode layer can be controlled as follows. In the production of the anode, an anode paste is applied onto the anode collector. Before the applied anode paste is dried to form the anode layer, a predetermined magnetic field is applied thereto for a predetermined period of time, thereby controlling the orientation degree. The predetermined period of time may be from one second to one hour, for example. The predetermined magnetic field may be from 0.1 T to 5 T, or it may be from 1 T to 3 T, for example.

The intensity ratio (110)/(002) of the (110) plane of the carbon composite material particles to the (002) plane thereof, both of which are obtained by X-ray diffraction measurement, may be 0.10 or more, or it may be 0.11 or more. The

upper limit of the intensity ratio is not particularly limited.

The carbon composite material contains the Si and the carbon material.

The content of the Si in the carbon composite material (i.e., the amount of the Si loaded on the carbon material) may be 1% by mass or more, may be 10% by mass or more, may be 47% by mass or more, may be 70% by mass or less, may be 50% by mass or less, or may be 49% by mass or less, for example. The content of the Si in the carbon composite material can be calculated by the following formula.

Si content (%) = Mass of the Si / (Mass of the carbon material + Mass of the Si) $\times$ 100

The outermost surface of the carbon composite material may be coated with the carbon material.

The first carbon material and the second carbon material are collectively referred to as "carbon material".

The aspect ratio of the first carbon material is only required to be more than 1. The aspect ratio may be 1.5 or more, may be 2 or more, may be 2.1 or more, may be 2.3 or more, or may be 2.4 or more. The upper limit of the aspect ratio is not particularly limited, and it may be 9.2 or less, may be 7.5 or less, may be 4.2 or less, may be 2.6 or less, or may be 2.5 or less.

The aspect ratio of the second carbon material is only required to be more than 1. The aspect ratio may be 1.5 or more, may be 2 or more, may be 2.3 or more, or may be 2.4 or more. The upper limit of the aspect ratio is not particularly limited, and it may be 9.2 or less, may be 7.5 or less, may be 4.2 or less, or may be 2.6 or less.

The aspect ratio of the first carbon material and that of the second carbon material may be the same aspect ratio, or they may be different aspect ratios.

The aspect ratio is obtained as follows: a SEM image of the section or surface of an electrode layer containing the carbon material or the carbon material in a powdery form is taken; from the particles shown in the image, 30 to 100 particles are extracted, and the average value of the aspect ratios of the 30 to 100 particles is calculated by image analysis; and the average value is determined as the aspect ratio of the carbon material. The aspect ratio is represented by the ratio of a/b where a is the long axis direction length of the carbon material and b is the short axis direction length thereof. When the carbon material has a thickness direction (e.g., a flake form), the thickness of the carbon material is determined as the short axis direction length b.

The aspect ratio of the carbon composite material may be the same as the aspect ratio of the first carbon material. The aspect ratio of the first carbon material may be considered as the aspect ratio of the carbon composite material.

The long axis direction length of the first carbon material may be 0.1 μm or more, may be 1 μm or more, may be 5.3 μm or more, may be 5.5 μm or more, may be 5.6 μm or more, may be 5.7 μm or more, may be 10.6 μm or more, may be 100 μm or less, may be 20 μm or less, or may be 18.2 μm or less, for example.

The short axis direction length of the first carbon material may be 0.1 μm or more, may be 1 μm or more, may be 2.1 μm or more, may be 2.3 μm or more, may be 2.7 μm or more, may be less than 100 μm, may be 20 μm or less, or may be 18.2 μm or less, for example.

The long axis direction length of the second carbon material may be 0.1 μm or more, may be 1 μm or more, may be 5.3 μm or more, may be 10.2 μm or more, may be 11.2 μm or more, may be 12.4 μm or more, may be 100 μm or less, may be 20 μm or less, or may be 18.2 μm or less, for example. From the viewpoint of obtaining the spaces for expansion of the carbon composite material, the long axis direction length of the second carbon material may be larger than the long axis direction length of the first carbon material.

The short axis direction length of the second carbon material may be 0.1 μm or more, may be 1 μm or more, may be 4.3 μm or more, may be 4.5 μm or more, may be 5.2 μm or more, may be less than 100 μm, may be 20 μm or less, or may be 18.2 μm or less, for example. From the viewpoint of obtaining the spaces for expansion of the carbon composite material, the short axis direction length of the second carbon material may be larger than the short axis direction length of the first carbon material.

The long axis direction length of the carbon composite material may be the same as the long axis direction length of the first carbon material. The long axis direction length of the first carbon material may be considered as the long axis direction length of the carbon composite material.

The short axis direction length of the carbon composite material may be the same as the short axis direction length of the first carbon material. The short axis direction length of the first carbon material may be considered as the short axis direction length of the carbon composite material.

As the first carbon material, examples include, but are not limited to, natural graphite, artificial graphite, activated carbon, carbon fibers, mesocarbon microbeads (MCMB), hard carbon and soft carbon.

As the second carbon material, examples include, but are not limited to, natural graphite, artificial graphite and hard carbon.

The form of the carbon material is not particularly limited. The carbon material may be in a particulate form, a flake form, a plate form, a fiber form or the like. The carbon material may be carbon particles, carbon fibers or the like.

When the carbon material is particles, the average particle diameter of the particles may be from 1 μm to 20 μm.

The carbon fibers may be obtained by carbonizing a carbon fibers raw material such as polyacrylonitrile (PAN) resin fiber and cellulose nanofiber. The carbonization condition may be heat-treatment of the carbon fibers raw material in an inert gas atmosphere at 1000°C to 1500°C.

Also, the carbon fibers may be a carbon material having a mesoporous structure, such as ordered mesoporous carbon (CMK-3). As the carbon fibers, carbon nanofiber, carbon nanotube or the like may be used.

The carbon material may be a composite comprising a bundle of carbon fibers. Since it is such a composite, the expansion direction of the Si is more limited, and allowing the Si to be in an amorphous form, which is due to its expansion and contraction, is more suppressed.

The carbon fibers may have at least one pore, or it may have pores.

The pores of the carbon fibers may be sequentially aligned in the long axis direction.

The pore diameter of the pores of the carbon fibers may be from 1 nm to 20 nm, for example.

The short axis direction length (width) of the carbon fibers may be, for example, 0.1 μm or more, may be 1 μm or more, may be 2.1 μm or more, may be 2.3 μm or more, may be 2.7 μm or more, may be less than 100 μm, may be 20 μm or less, or may be 18.2 μm or less.

The long axis direction length of the carbon fibers may be, for example, 0.1 μm or more, may be 1 μm or more, may be 5.3 μm or more, may be 5.5 μm or more, may be 5.7 μm or more, may be 100 μm or less, may be 20 μm or less, or may be 18.2 μm or less.

The composite comprising the bundle of the carbon fibers can be obtained by utilizing, for example, aggregation in a poor solvent environment. For example, it is estimated that when the carbon fibers are reacted by strongly stirring them in a xylene solvent as the poor solvent, the carbon fibers aggregate by the action of functional groups (such as a -COOR group) present on the surface of the carbon fibers. A dispersion thus obtained is passed through a slit and quickly dried, thereby obtaining the composite comprising the bundle of the carbon fibers. As needed, the obtained composite may be cut or pulverized by mechanical milling or the like.

The Si may be amorphous or crystalline.

When the Si is crystalline, the crystallite size of the Si, which is measured by X-ray diffraction (XRD), may be from 1 nm to 1 μm.

The Si may be loaded on the surface of the first carbon material. When the first carbon material is the carbon fibers, the Si may be loaded on the surface of the carbon fibers and/or in the pores of the carbon fibers. After loading the Si on and/or in the first carbon material, the surface of the Si may be coated with the second carbon material.

The method for loading the Si on and/or in the first carbon material is not particularly limited. As the loading method, examples include, but are not limited to, the following methods: chemical vapor deposition (CVD), immersion of the first carbon material in a silicon melt, and formation of a silicon layer on and/or in the first carbon material by using tetraethyl orthosilicate (TEOS).

As the CVD, examples include, but are not limited to, thermal CVD (chemical vapor deposition using thermal decomposition), PECVD (chemical vapor deposition using plasma or plasma-enhanced chemical vapor deposition) and ALD (atomic layer deposition). The use of thermal CVD is advantageous in that amorphous Si can be uniformly formed.

As the Si source used in the CVD, examples include, but are not limited to, silane ($SiH_4$) and halogenated silane ($H_{4-x}SiCl_x$).

The components of the Si in the carbon composite material can be detected by inductively-coupled plasma (ICP) spectroscopy or a quantitative analysis method using an electron probe microanalyzer (EPMA) or the like.

The carbon composite material may be produced by loading silicon on a substrate comprising the first carbon material.

FIG. 2 is a schematic view showing an example of the method for producing the carbon composite material of the present disclosure.

As shown in FIG. 2, a carbon composite material 12 may be produced as follows: a carbon fibers raw material 10 is carbonized to form carbon fibers 11, in each of which pores are aligned in the longitudinal direction, and Si is vapor-deposited in the pores of the carbon fibers 11, thereby producing the carbon composite material 12.

As the material for the anode collector, examples include, but are not limited to, SUS, aluminum, copper, nickel, iron, titanium and carbon. The thickness of the anode collector varies depending on the form. For example, the thickness may be in a range of from 1 μm to 50 μm. The form of the anode collector may be a foil form, a plate form or the like. The plan view shape of the anode collector is not particularly limited. As the shape, examples include, but are not limited to, a circular shape, an elliptical shape, a rectangular shape and any polygonal shape. The structure of the anode collector may be such that a buffer layer, an elastic layer or a PTC thermistor layer is disposed on the surface.

The anode of the present disclosure is used in batteries.

A battery includes a cathode, an electrolyte layer and an anode.

According to the present disclosure, the use of the above-described anode in batteries can suppress battery expansion.

[Cathode]

The cathode includes the cathode layer. As needed, it further includes a cathode collector.

The cathode layer may be disposed on one surface of the cathode collector, or it may be disposed on both surfaces of the cathode collector. The cathode may have a multi-layered structure by forming two or more cathode layers on at least one surface of the cathode collector. In the case of forming two or more cathode layers, the cathode active materials contained in the cathode layers may be the same type of cathode active material, or they may be different types of cathode active materials.

The cathode layer is a layer which contains at least a cathode active material. As needed, the cathode layer may contain at least one selected from the group consisting of an electroconductive material and a binder.

As the cathode active material, examples include, but are not limited to, an oxide active material. As the oxide active material, examples include, but are not limited to, a layered rock salt-type active material such as $LiCoO_2$, $LiMnO_2$, $LiNiO_2$, $LiVO_2$, $LiNi_{1/3}Co_{1/3}Mn_{1/3}O_2$ and $LiNi_{0.8}Mn_{0.1}Co_{0.1}O_2$, a spinel-type active material such as $LiMn_2O_4$, $Li_4Ti_5O_{12}$ and $Li(Ni_{0.5}Mn_{1.5})O_4$, and an olivine-type active material such as $LiFePO_4$, $LiMnPO_4$, $LiNiPO_4$ and $LiCoPO_4$.

The cathode active material is generally in a particulate form. The cathode active material may be primary particles, or it may be secondary particles (aggregated primary particles).

The average particle diameter of the cathode active material is not particularly limited. For example, the average particle diameter is 0.01 μm or more and 50 μm or less, or it may be 0.5 μm or more and 30 μm or less.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 95% by mass or less, for example. It may be 70% by mass or less, or it may be 60% by mass or less. When the percentage of the cathode active material is too large, the ion conductivity and electron conductivity of the cathode layer may relatively decrease.

The cathode layer may contain an electroconductive material. The electron conductivity of the cathode layer is increased by adding the electroconductive material. As the electroconductive material, examples include, but are not limited to, a carbonaceous electroconductive material, metal particles and an electroconductive polymer. As the carbonaceous electroconductive material, examples include, but are not limited to, a particulate material such as Acetylene Black (AB) and Ketjen Black (KB) and a fibrous material such as vapor-grown carbon fiber (VGCF), carbon nanotube (CNT) and carbon nanofiber (CNF).

The percentage of the electroconductive material in the cathode layer may be 0.1% by mass or more, for example. When the percentage of the electroconductive material is too small, the cathode layer may have a shortage of electron conducting paths. On the other hand, the percentage of the electroconductive material in the cathode layer may be 5% by mass or less, for example. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), a styrene-isoprene-styrene block copolymer (SIS) and an ethylene-propylene-diene copolymer (EPDM).

The percentage of the binder in the cathode layer may be 0.5% by mass or more, for example. When the percentage of the binder is too small, there is a possibility that an increase in resistance which is due to charge and discharge, cannot be sufficiently reduced. On the other hand, the percentage of the binder in the cathode layer may be 15% by mass or less, for example. When the percentage of the binder is too large, the percentage of the cathode active material is relatively small, and a low energy density may be obtained.

The thickness of the cathode layer is 0.1 μm or more and 1000 μm or less, for example. The thickness of the cathode layer may be 1 μm or more and 500 μm or less, or it may be 30 μm or more and 200 μm or less.

The method for producing the cathode layer is not particularly limited. For example, the production method may be a method including the steps of obtaining a cathode slurry by mixing the cathode active material and a solvent, applying the cathode slurry to a cathode collector and drying the applied slurry, thereby forming the cathode layer. To form the cathode layer, a press treatment (pressing the cathode layer in the thickness direction) may be performed. As the press treatment, examples include, but are not limited to, roller press and plate press.

As the solvent, examples include, but are not limited to, N-methylpyrrolidone (NMP), tetralin, diisobutyl ketone, butyl butyrate, mesitylene, heptane, dibutyl ether, decane, dodecane, isodecane and toluene. The solvent may contain two or more selected from these components.

As the material for the cathode collector, examples include, but are not limited to, SUS, Cr, Au, Pt, Zn, aluminum, copper, nickel, iron, titanium and carbon. The thickness of the cathode collector is 0.1 μm or more and 100 μm or less, for example. The form of the cathode collector may be a foil form, a plate form or the like. The plan view shape of the cathode collector is not particularly limited. As the shape, examples include, but are not limited to, a circular shape, an elliptical

shape, a rectangular shape and any polygonal shape. The structure of the cathode collector may be such that a buffer layer, an elastic layer or a positive temperature coefficient (PTC) thermistor layer is disposed on the surface.

[Electrolyte layer]

The electrolyte layer is a layer formed between the cathode layer and the anode layer, and it contains at least an electrolyte. The electrolyte may be a liquid electrolyte (an electrolytic solution).

The electrolyte layer may contain an electrolytic solution and so on.

As the electrolytic solution, a non-aqueous electrolytic solution or the like can be used.

As the non-aqueous electrolytic solution, one containing a lithium salt and a non-aqueous solvent is generally used.

As the lithium salt, examples include, but are not limited to, an inorganic lithium salt such as $LiPF_6$, $LiBF_4$, $LiClO_4$ and $LiAsF_6$, and an organic lithium salt such as $LiCF_3SO_3$, $LiN(SO_2CF_3)_2$(Li-TFSI), $LiN(SO_2C_2F_5)_2$ and $LiC(SO_2CF_3)_3$.

As the non-aqueous solvent, examples include, but are not limited to, ethylene carbonate (EC), propylene carbonate (PC), butylene carbonate (BC), dimethyl carbonate (DMC), diethyl carbonate (DEC), ethyl methyl carbonate (EMC), $\gamma$-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. From the viewpoint of obtaining high dielectric constant and low viscosity, the non-aqueous solvent may be a mixture of a cyclic carbonate compound having high dielectric constant and high viscosity (such as EC, PC and BC) and a chain carbonate compound having low dielectric constant and low viscosity (such as DMC, DEC and EMC), or it may be a mixture of EC and DEC.

The concentration of the lithium salt in the non-aqueous electrolytic solution may be from 0.3 M to 5 M, for example.

As the electrolyte layer, a separator which is impregnated with the above-mentioned electrolytic solution and is configured to prevent contact between the cathode layer and the anode layer, may be used.

The material for the separator is not particularly limited, as long as it is a porous film. As the material, examples include, but are not limited to, resins such as polyethylene (PE), polypropylene (PP), polyester, polyvinyl alcohol, cellulose and polyamide. Of them, the material for the separator may be polyethylene or polypropylene. The separator may have a single-layered structure or a multi-layered structure. As the separator having a multi-layered structure, examples include, but are not limited to, a separator having a two-layered structure such as PE/PP, and a separator having a three-layered structure such as PP/PE/PP and PE/PP/PE.

The separator may be a non-woven fabric such as a resin non-woven fabric or a glass fiber non-woven fabric.

The thickness of the electrolyte layer is 0.1 $\mu$m or more and 100 $\mu$m or less, for example. The thickness of the electrolyte layer may be 0.1 $\mu$m or more and 500 $\mu$m or less, or it may be 0.1 $\mu$m or more and 30 $\mu$m or less.

In the present disclosure, the battery may further include a fixing jig for applying a fixing pressure to the cathode layer, the electrolyte layer and the anode layer along the thickness direction. The fixing pressure is 0.1 MPa or more, for example. It may be 1 MPa or more, or it may be 5 MPa or more. On the other hand, the fixing pressure is 100 MPa or less, for example. It may be 50 MPa or less, or it may be 20 MPa or less.

[Battery]

In the present disclosure, the type of the battery is not particularly limited. The battery of the present disclosure is typically a lithium ion battery. Also in the present disclosure, the battery may be a liquid battery in which the electrolyte layer contains an electrolytic solution. The liquid battery may be a non-aqueous liquid battery in which the electrolyte layer contains a non-aqueous liquid electrolyte. In the present disclosure, the battery may be a primary battery or a secondary battery. Among them, it may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

When the battery is a cell stack consisting of stacked cells, the cell stack may be a monopolar cell stack or a bipolar cell stack.

The bipolar electrode of the present disclosure is a bipolar electrode comprising the anode described above and a cathode,

wherein the cathode comprises a cathode collector and a cathode layer in this order on another surface of the anode collector.

As the applications of the battery, examples include, but are not limited to, the power sources of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used as the driving power supply of a hybrid

electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as an information processing device.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

EXAMPLES

(Example 1)

[Preparation of carbon fibers]

As a carbon fibers raw material, PAN resin fibers were carbonized by heat-treatment in an inert gas (Ar gas) atmosphere at 1500°C, thereby preparing carbon fibers having pores.

The aspect ratio of the carbon fibers was 2.5. The long axis direction length of the carbon fibers was 5.3 μm.

[Production of a composite comprising a bundle of the carbon fibers]

Using the carbon fibers, a composite comprising a bundle of the carbon fibers was produced by the following method. The carbon fibers were stirred in a xylene solvent as a poor solvent. A dispersion thus obtained was passed through a slit and quickly dried, thereby obtaining a composite comprising a bundle of the carbon fibers. The obtained composite was used as a carbon material.

[Production of carbon composite material]

Silicon was loaded on and in the carbon material as follows by thermal CVD.

The carbon material was placed in a chamber. While supplying a gas flow into the chamber, which served as a Si source, a temperature required for thermal decomposition (700°C) was applied to the carbon material. Accordingly, Si particles were loaded on the surface of and in the pores of the carbon material, thereby obtaining carbon composite material particles (silicon-carbon composite material particles). The components of the loaded Si were found out by ICP spectrometry. The content of the Si in the carbon composite material was 48%. The crystallite size of the Si was measured by XRD. As a result, the crystallite size was equal to or less than the lower detection limit, and the Si was amorphous.

[Production of anode]

The carbon composite material particles (as the anode active material), natural graphite (as the second carbon material), polyacrylic acid and styrene-butadiene rubber (as the binder) and carbon nanotube (as the electroconductive material) were used and mixed at a mass ratio of 4.8:91.6:1.5:2:0.1 (unit: %) to obtain a mixture. The carbon composite material particles and the second carbon material were mixed at a mixing ratio (mass ratio) of 5:95 (unit: %). Distilled water (as the solvent) was added to the obtained mixture. Then, these materials were sufficiently mixed by a mixer, thereby obtaining an anode paste. The anode paste was applied onto a copper foil (as the anode collector) by a doctor blade. Then, a magnetic field of 1 T was applied to the applied anode paste for a predetermined period of time. Then, the anode paste was dried at 120°C for 15 minutes to absolutely vaporize the solvent, thereby obtaining an anode which an anode layer was formed on the anode collector.

[Production of cathode]

A transition metal oxide $LiNi_{0.8}Mn_{0.1}Co_{0.1}O_2$ was used as the cathode active material. The cathode active material, the electroconductive material (acetylene black) and the binder (polyvinylidene fluoride) were mixed at a mass ratio of 95:2.5:2.5 (unit: %) to obtain a mixture. As a solvent, N-methylpyrrolidone was added to the obtained mixture. These materials were sufficiently mixed by a mixer, thereby obtaining a cathode paste. The cathode paste was applied onto an aluminum foil (as the cathode collector) by a doctor blade. The applied cathode paste was dried in an environment at 120°C for 15 minutes, thereby producing a cathode which a cathode layer was formed on the cathode collector. The produced cathode was pressed by a biaxial roll press machine so that the density of the cathode layer was 3.2 g/cm$^3$. The capacity ratio of the cathode layer to the anode layer was adjusted so that the cathode capacity/anode capacity ratio was 1.1.

[Separator]

As the separator, a polyethylene separator was used.

[Electrolytic solution]

As the electrolytic solution, a solution prepared by adding, to a carbonate-based solvent in which a lithium salt (lithium hexafluorophosphate ($LiPF_6$)) was contained at a concentration of 1 M, 10% by volume of fluoroethylene carbonate (FEC) and 2% by volume of vinylene carbonate (VC) with respect to 100% by volume (the total volume) of the solvent in the electrolytic solution, was used. The separator was impregnated with the electrolytic solution.

[Production of battery]

The produced cathode and anode were cut with a predetermined area, and the separator impregnated with the electrolytic solution was disposed therebetween. A stack thus obtained was coated with a laminate film, thereby producing an electrochemical cell (a battery).

(Example 2)

A battery was produced in the same manner as Example 1, except for the following: in "Production of anode", the carbon composite material particles (as the anode active material), natural graphite (as the second carbon material), polyacrylic acid and styrene-butadiene rubber (as the binder) and carbon nanotube (as the electroconductive material) were used and mixed at a mass ratio of 19.3:77.1:1.5:2:0.1 (unit: %), and the carbon composite material particles and the second carbon material were mixed at a mixing ratio (mass ratio) of 20:80 (unit: %).

(Example 3)

A battery was produced in the same manner as Example 1, except for the following: in "Production of anode", the carbon composite material particles (as the anode active material), natural graphite (as the second carbon material), polyacrylic acid and styrene-butadiene rubber (as the binder) and carbon nanotube (as the electroconductive material) were used and mixed at a mass ratio of 28.9:67.5:1.5:2:0.1 (unit: %), and the carbon composite material particles and the second carbon material were mixed at a mixing ratio (mass ratio) of 30:70 (unit: %).

(Comparative Example 1)

A battery was produced in the same manner as Example 1, except for the following: in "Production of anode", the magnetic field was not applied to the anode paste.

(Comparative Example 2)

A battery was produced in the same manner as Example 2, except for the following: in "Production of anode", the magnetic field was not applied to the anode paste.

(Comparative Example 3)

A battery was produced in the same manner as Example 3, except for the following: in "Production of anode", the magnetic field was not applied to the anode paste.

(Comparative Example 4)

A battery was produced in the same manner as Example 2, except for the following: in "Production of anode", the magnetic field was not applied to the anode paste, and the obtained anode was pressed by a biaxial roll press machine so that the density of the anode layer was 1.31 g/cm$^3$.

As for Examples 1 to 3 and Comparative Examples 1 to 4, Table 1 shows the ratio of the carbon composite material to the second carbon material, the ratio between the carbon composite material, the second carbon material, the PAA, the SBR and the CNT, and the density of the anode layer.

[Table 1]

| | Ratio (% by mass) of the carbon composite material to the second carbon material | Ratio (% by mass) between the carbon composite material, the second carbon material, the PAA, the SBR and the CNT | Anode layer density (g/cm$^3$) |
|---|---|---|---|
| Example 1 | 5:95 | 4.8:91.6:1.2:2:0.1 | 1.02 |
| Example 2 | 20:80 | 19.3:77.1:1.5:2:0.1 | 0.98 |
| Example 3 | 30:70 | 28.9:67.5:1.5:2:0.1 | 0.95 |
| Comparative Example 1 | 5:95 | 4.8:91.6:1.2:2:0.1 | 0.98 |
| Comparative Example 2 | 20:80 | 19.3:77.1:1.5:2:0.1 | 0.91 |
| Comparative Example 3 | 30:70 | 28.9:67.5:1.5:2:0.1 | 0.93 |
| Comparative Example 4 | 20:80 | 19.3:77.1:1.5:2:0.1 | 1.31 |

[Determination of orientation degree in anode]

The orientation degree of the carbon composite material particles in each of the anodes produced in Examples 1 to 3 and Comparative Examples 1 to 4, and the orientation degree of the second carbon material were calculated by use of a SEM image of a cross-section of the anode.

The percentage of the carbon composite material particles that the angle $\theta$ formed by the surface of the anode collector and the line of the carbon composite material particles in the long axis direction was 50° or more and 90° or less, was calculated.

Also, the orientation degree of the carbon composite material particles in each of the anodes produced in Examples 1 to 3 and Comparative Examples 1 to 4, was obtained by X-ray diffraction measurement. First, the anode was cut with a predetermined area. The cut anode was placed on a sample board. Using CuK$\alpha$ as the X-ray source, the cut anode was measured in the following conditions.

Scanning range: 5° to 80°
Scanning rate: 5°/min
Step angle: 0.02°

Then, the peak intensity of the (002) plane ($2\theta$ = 25.5° to 26.6°) and that of the (110) plane ($2\theta$ = 77° to 78.5°) were obtained, and the intensity ratio (110)/(002) was calculated.

Of the second carbon material particles contained in the anode layer, the percentage of those that the angle $\theta n$ formed by the surface of the anode collector and the line of the second carbon material particles in the long axis direction was 50° or more and 90° or less, was calculated.

Table 2 shows the following properties of the carbon composite material particles: the average length a in the long axis direction, the average length b in the short axis direction, the aspect ratio a/b, the intensity ratio (110)/(002), and the percentage of the carbon composite material particles that the angle $\theta$ was 50° or more and 90° or less.

Table 3 shows the following properties of the second carbon material particles: the average length a in the long axis direction, the average length b in the short axis direction, the aspect ratio a/b, and the percentage of the second carbon material particles that the angle $\theta n$ was 50° or more and 90° or less.

[Table 2]

| | Long axis direction average length a ($\mu$m) of the carbon composite material particles | Short axis direction average length b ($\mu$m) of the carbon composite material particles | Aspect ratio a/b of the carbon composite material particles | Intensity ratio (110)/(002) | Percentage (%) of the carbon composite material particles that the angle $\theta$ was 50° or more and 90° or less |
|---|---|---|---|---|---|
| Example 1 | 5.3 | 2.1 | 2.5 | 0.10 | 62 |
| Example 2 | 5.7 | 2.7 | 2.1 | 0.11 | 71 |
| Example 3 | 5.5 | 2.3 | 2.4 | 0.11 | 65 |

(continued)

| | Long axis direction average length a (μm) of the carbon composite material particles | Short axis direction average length b (μm) of the carbon composite material particles | Aspect ratio a/b of the carbon composite material particles | Intensity ratio (110)/(002) | Percentage (%) of the carbon composite material particles that the angle θ was 50° or more and 90° or less |
|---|---|---|---|---|---|
| Comparative Example 1 | 5.4 | 2.1 | 2.6 | 0.02 | 43 |
| Comparative Example 2 | 5.8 | 2.7 | 2.1 | 0.01 | 46 |
| Comparative Example 3 | 5.4 | 2.4 | 2.3 | 0.01 | 45 |
| Comparative Example 4 | 5.5 | 2.6 | 2.1 | Less than the lower detection limit | 18 |

[Table 3]

| | Long axis direction average length a (μm) of the second carbon material particles | Short axis direction average length b (μm) of the second carbon material particles | Aspect ratio a/b of the second carbon material particles | Percentage (%) of the second carbon material particles that the angle θn was 50° or more and 90° or less |
|---|---|---|---|---|
| Example 1 | 11.2 | 4.3 | 2.6 | 72 |
| Example 2 | 10.2 | 4.5 | 2.3 | 78 |
| Example 3 | 12.4 | 5.2 | 2.4 | 81 |
| Comparative Example 1 | 11.0 | 4.6 | 2.4 | 42 |
| Comparative Example 2 | 11.1 | 4.8 | 2.3 | 38 |
| Comparative Example 3 | 11.2 | 4.6 | 2.4 | 43 |
| Comparative Example 4 | 11.0 | 4.8 | 2.3 | 15 |

[Evaluation of the capacity retention rate of each battery]

By a cycle life test, the batteries produced in Examples 1 to 3 and Comparative Examples 1 to 4 were measured for changes in the capacity retention rate during charge-discharge cycles.

The batteries were charged as follows. At a constant current, 0.3 C (C: hour rate capacity) was applied to each battery. After the battery voltage reached 4.2 V, the battery was charged by applying a constant voltage thereto until the current value became 0.01 C.

The batteries were discharged as follows. At a constant current, 0.3 C was applied to each battery. The battery was discharged until the battery voltage reached 2.5 V.

A pause for 10 minutes was provided between the charge and the discharge.

After repeating the charge and discharge for 30 cycles, the capacity of each battery was measured. The discharge capacity of the battery after the 30 cycles was divided by the discharge capacity thereof at the first cycle, thereby calculating the capacity retention rate of the battery. The results are shown in Table 4.

[Evaluation of anode layer expansion rate]

Using a contact displacement meter, the expansion and contraction behavior of the batteries produced in Examples 1 to 3 and Comparative Examples 1 to 4, which was due to battery charge and discharge, was evaluated.

The batteries were charged as follows. At a constant current, 0.3 C (C: hour rate capacity) was applied to each battery. After the battery voltage reached 4.2 V, the battery was charged by applying a constant voltage thereto until the current value became 0.01 C.

The batteries were discharged as follows. At a constant current, 0.3 C was applied to each battery. The battery was discharged until the battery voltage reached 2.5 V.

A pause for 10 minutes was provided between the charge and the discharge.

After repeating the charge and discharge for 30 cycles, the thickness of the anode layer during battery discharge after the 30 cycles was measured. The thickness of the anode layer in the initial state before battery charge at the first cycle, was measured. The anode layer expansion rate of each battery was calculated by the following formula. The results are shown in Table 4.

Anode layer expansion rate (%) = (Anode layer thickness during battery discharge after the 30 cycles - Anode layer thickness in the initial state)/ Anode layer thickness in the initial state × 100

[Table 4]

| | Anode layer thickness expansion rate after the 30 cycles | Capacity retention rate after the 30 cycles |
|---|---|---|
| | % | % |
| Example 1 | 3.2 | 99.0 |
| Example 2 | 4.5 | 99.2 |
| Example 3 | 4.3 | 99.0 |
| Comparative Example 1 | 5.2 | 97.5 |
| Comparative Example 2 | 5.8 | 97.2 |
| Comparative Example 3 | 6.9 | 95.0 |
| Comparative Example 4 | 7.9 | 94.2 |

As shown in Table 4, the expansion rate after the 30 cycles is lower in the anode layers of Example 1 to 3 than in the anode layers of Comparative Examples 1 to 4. Accordingly, it was proved that the expansion of the anode layers of Examples 1 to 3 was suppressed. In Comparative Example 4, the density of the anode layer was increased higher than the density of the anode layer produced at the same mixing ratio in Comparative Example 2. As a result, it was revealed that the expansion rate is increased.

As shown in Table 4, the capacity retention rate after the 30 cycles is higher in the batteries of Examples 1 to 3 than in the batteries of Comparative Examples 1 to 4. Accordingly, it was proved that the batteries of Examples 1 to 3 can suppress a decrease in the capacity retention rate after the 30 cycles. In Comparative Example 4, the density of the anode layer was increased higher than the density of the anode layer produced at the same mixing ratio in Comparative Example 2. As a result, it was revealed that the capacity retention rate of the battery after the 30 cycles is decreased.

REFERENCE SIGNS LIST

10. Carbon fiber raw material
11. Carbon fiber
12. Carbon composite material
20. Anode
21. Anode collector
22. Anode layer
30. Carbon composite material particles
31. Second carbon material particles
40. Space for expansion

## Claims

1. An anode (20) comprising an anode collector (21) and an anode layer (22) on at least one surface of the anode collector (21),

   wherein the anode layer (22) comprises a carbon composite material (12) comprising Si and a first carbon material having an aspect ratio of more than 1, and a second carbon material having an aspect ratio of more than 1;
   wherein the carbon composite material (12) is carbon composite material particles (30);
   wherein the second carbon material is second carbon material particles (31); and
   wherein, of the carbon composite material particles (30) contained in the anode layer (22), a percentage of those that an angle $\theta$ formed by the surface of the anode collector (21) and a line of the carbon composite material particles (30) in long axis direction is 50° or more and 90° or less, is 62% or more.

2. The anode (20) according to claim 1, wherein, of the second carbon material particles (31) contained in the anode layer (22), a percentage of those that an angle $\theta n$ formed by the surface of the anode collector (21) and a line of the second carbon material particles (31) in long axis direction is 50° or more and 90° or less, is 72% or more.

3. The anode (20) according to claim 1 or 2, wherein, when a total of the second carbon material and the carbon composite material (12) is 100% by mass, a percentage of the carbon composite material (12) is from 5% by mass to 30% by mass.

4. The anode (20) according to any one of claims 1 to 3, wherein an intensity ratio (110)/(002) of a (110) plane of the carbon composite material particles (30) to a (002) plane thereof, both of which are obtained by X-ray diffraction measurement, is 0.10 or more.

5. The anode (20) according to any one of claims 1 to 4, wherein at least one of the carbon composite material particles (30) is disposed in each of spaces surrounded by the second carbon material particles (31).

6. The anode (20) according to any one of claims 1 to 5,

   wherein the first carbon material is carbon fibers (11), and
   wherein the second carbon material is at least one selected from the group consisting of natural graphite, artificial graphite and hard carbon.

7. The anode (20) according to any one of claims 1 to 6, wherein the anode (20) comprises a plurality of the anode layers (22).

8. A bipolar electrode comprising the anode (20) defined by any one of claims 1 to 7 and a cathode,
   wherein the cathode comprises a cathode collector and a cathode layer in this order on another surface of the anode collector (21).

FIG. 1

20
22
30
31
θ
21
(A)
31
30
40
(B)

FIG. 2

Carbonization
Si vapor deposition
1 0
1 1
1 2

# EUROPEAN SEARCH REPORT

Application Number
EP 26 15 6061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/008697 A1 (NORTHVOLT AB [SE]) 11 January 2024 (2024-01-11)<br>* the whole document *<br>-& US 2025/385247 A1 (KORDE PRASAD MANGESH [SE] ET AL) 18 December 2025 (2025-12-18)<br>* paragraphs [0021], [0022], [0024], [0033], [0046] - [0054]; figures 1-3; table 2 * | 1-8 | INV.<br>H01M4/133<br>H01M4/134<br>H01M4/36<br>H01M4/38<br>H01M4/587<br>H01M10/0525<br>H01M4/62 |
| A | EP 4 447 164 A1 (LG ENERGY SOLUTION LTD [KR]) 16 October 2024 (2024-10-16)<br>* paragraphs [0048] - [0053] * | 1-8 | |
| X | US 2023/387385 A1 (MURAKAMI YASUYUKI [JP]) 30 November 2023 (2023-11-30)<br>* 6, 16, 29, 32, 34, 43, 47, 62, 71-76, 78, 82, 113, 192-195, 203, 206; examples 1-3; tables 1-2 * | 1-8 | |
| A | EP 4 163 995 B1 (SAMSUNG SDI CO LTD [KR]) 3 July 2024 (2024-07-03)<br>* paragraphs [0024] - [0028] * | 1-8 | TECHNICAL FIELDS SEARCHED (IPC) |
| A | US 2015/030931 A1 (TAKAHATA KOJI [JP] ET AL) 29 January 2015 (2015-01-29)<br>* paragraphs [0063] - [0064], [0213]; figure 13 * | 1-8 | H01M |
| A | US 2022/190345 A1 (HAGIWARA HIDEKI [JP]) 16 June 2022 (2022-06-16)<br>* paragraphs [0024] - [0030]; figure 2 * | 1-8 | |

The present search report has been drawn up for all claims

| Place of search | Date of completion of the search | Examiner |
|---|---|---|
| The Hague | 16 June 2026 | Ferreira Marinha, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

4

## ANNEX TO THE EUROPEAN SEARCH REPORT ON EUROPEAN PATENT APPLICATION NO.

EP 26 15 6061

This annex lists the patent family members relating to the patent documents cited in the above-mentioned European search report. The members are as contained in the European Patent Office EDP file on
The European Patent Office is in no way liable for these particulars which are merely given for the purpose of information.

16-06-2026

| Patent document cited in search report | Publication date | Patent family member(s) | Publication date |
|---|---|---|---|
| WO 2024008697 A1 | 11-01-2024 | SE 2250839 A1 | 05-01-2024 |
| | | US 2025385247 A1 | 18-12-2025 |
| | | WO 2024008697 A1 | 11-01-2024 |
| US 2025385247 A1 | 18-12-2025 | SE 2250839 A1 | 05-01-2024 |
| | | US 2025385247 A1 | 18-12-2025 |
| | | WO 2024008697 A1 | 11-01-2024 |
| EP 4447164 A1 | 16-10-2024 | CN 118541828 A | 23-08-2024 |
| | | EP 4447164 A1 | 16-10-2024 |
| | | JP 7801467 B2 | 16-01-2026 |
| | | JP 2025503069 A | 30-01-2025 |
| | | JP 2026040720 A | 09-03-2026 |
| | | KR 102544496 B1 | 20-06-2023 |
| | | WO 2024136079 A1 | 27-06-2024 |
| US 2023387385 A1 | 30-11-2023 | CN 116391272 A | 04-07-2023 |
| | | EP 4246614 A1 | 20-09-2023 |
| | | JP WO2022102724 A1 | 19-05-2022 |
| | | US 2023387385 A1 | 30-11-2023 |
| | | WO 2022102724 A1 | 19-05-2022 |
| EP 4163995 B1 | 03-07-2024 | EP 4163995 A1 | 12-04-2023 |
| | | KR 20230048930 A | 12-04-2023 |
| | | US 2023109254 A1 | 06-04-2023 |
| US 2015030931 A1 | 29-01-2015 | CN 103988344 A | 13-08-2014 |
| | | DE 112011105960 T5 | 25-09-2014 |
| | | JP 5892393 B2 | 23-03-2016 |
| | | JP WO2013088540 A1 | 27-04-2015 |
| | | US 2015030931 A1 | 29-01-2015 |
| | | WO 2013088540 A1 | 20-06-2013 |
| US 2022190345 A1 | 16-06-2022 | CN 114695889 A | 01-07-2022 |
| | | DE 102021132631 A1 | 15-06-2022 |
| | | KR 20220085014 A | 21-06-2022 |
| | | US 2022190345 A1 | 16-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019185943 A
- JP 2016103337 A